# EUROPEAN PATENT APPLICATION

(11) **EP 1 176 572 A2**
(43) Date of publication of application: **30.01.2002**
(21) Application number: 01118362.1
(22) Date of filing: 27.07.2001
(51) Int. Cl.: G09B 17/00

(54) **Electronic equipment with an autonomous function and method for controlling such an electronic equipment**

(30) Priority: 27.07.2000 JP 2000226286
(71) Applicant: YAMAHA HATSUDOKI KABUSHIKI KAISHA, Iwata-shi Shizuoka-ken (JP)
(72) Inventor: Yoshida, Makoto, Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(57) **Abstract**

Electronic equipment with an autonomous function and method for controlling an electronic equipment with an autonomous function comprising environment detection means monitoring an environment of the electronic equipment, condition determining means determining a condition of the electronic equipment on the basis of information taken from the environment detection means, an action control means controlling a main action of the electronic equipment and controlling a condition action of the electronic equipment on the basis of the condition produced by the condition production means. Said action control means carries out the condition action prior to the main action.

## Description

This invention relates to electronic equipment with an autonomous function and to a method for controlling an electronic equipment with an autonomous function.

There has been known a pet robot, for example, as electronic equipment that has an autonomous function described above. The pet robot is a system in which information such as surrounding situations or the movement of the pet owner (user of the pet robot) is acquired with a CCD camera or a microphone; information on the owner, etc, is extracted from the information acquired by means of image recognition devices or voice recognition devices; an emotion (a condition of the electronic equipment) is produced based on the extracted information; and actions are determined based on the emotion.

However, if the movement is determined, simply based on an emotion to be performed as in the foregoing conventional pet robot, it is impossible for a user to understand the emotion by intuition, therefore the user often feels the movement to be improper and out of place.

Such a problem is not limited to the case of a pet robot, but it is found, for example, in an electronic pet device or other electronic equipment with an autonomous function as well.

It is an objective of the present invention to provide an electronic equipment with an autonomous function and to a method for controlling an electronic equipment with an autonomous function, wherein the action of the electronic equipment is predictable.

According to the apparatus aspect of the present invention, said objective is solved by an electronic equipment with an autonomous function according to claim 1.

According to the method aspect of the present invention, said objective is solved by a method for controlling an electronic equipment with an autonomous function according to claim 6.

Preferred embodiments of the present invention are laid down in the respective dependent claims.

In view of the embodiment of a pet-robot or the like as the electronic equipment with an autonomous function, a user is able to predict its movement easily and released from a feeling that something is wrong with its actions.

In the following, the present invention is explained in greater detail with respect to several embodiments thereof in conjunction with the accompanying drawings, wherein:
- Fig. 1: is a schematic block diagram showing the outline of one embodiment of a pet robot;
- Fig. 2: is a block diagram showing the outline of processing in the embodiment;
- Fig. 3: is a flowchart of a pet robot control program;
- Fig. 4: is a flowchart of a subroutine for determining actions representing an emotion, used in the program of Fig. 5;
- Fig. 5: shows illustrations of movements of the pet robot of this embodiment;
- Fig. 6: shows illustrations of movements of the pet robot of this embodiment; and
- Fig. 7: is a schematic block diagram showing a variation of one embodiment of the pet robot.

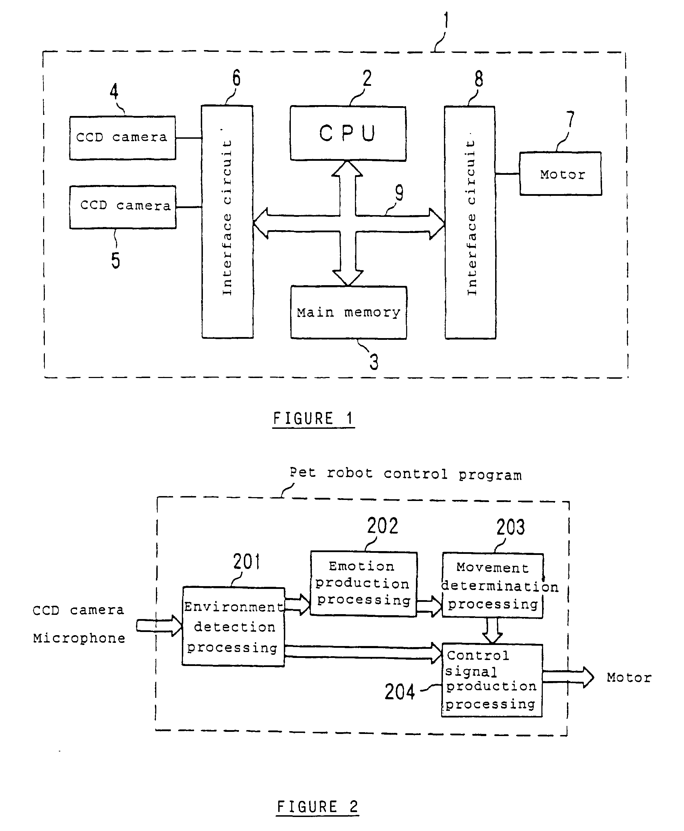

Fig. 1 is a schematic block diagram of one embodiment of the electronic equipment with an autonomous function which is a pet robot.

As shown in Fig. 1, the pet robot 1 of this embodiment is comprised of a CPU 2; a main memory 3 for storing a program such as an OS, or other requisite information; an interface circuit 6 for input devices such as an externally provided CCD camera 6 with a wide shooting area and a low resolution and a CCD camera 5 with a narrow shooting area and a high resolution; an interface circuit 8 for output devices such as a motor 7, and the like; and a system bus 9 for connecting, as appropriate, the CPU 2, the main memory 3 and the interface circuits 6, 7.

The user of the pet robot 1 starts a pet robot control program stored in a given region so that the program is executed as a timer interrupt processing on the CPU 2 at control periods of ΔT (for example 10 msec).

In general, the electronic equipment with an autonomous function comprises condition determining means provided for determining the condition of the electronic equipment on the basis of information taken from the environment detection means. In case of the pet-robot according to the embodiment said condition of the electronic equipment represents an emotion condition of the pet-robot, as described in detail later.

The pet robot control program, as shown in Fig. 2, comprises environment detection processing 201 for detecting user movements or surroundings; emotion production processing 202 for producing an emotion based on the detection result of the environment detection processing 201; movement determination processing 203 for determining a movement to be performed referring to an emotion produced in the emotion production processing 202; and control signal production processing 204 for producing a control signal for use in performing a movement determined in the emotion production processing 202 based on the detection result of the information detection processing 201.

The environment detection processing 201 is adapted to detect several kinds of information on movements performed by a user for care for the pet robot, surrounding objects and the ambient temperature, from signals inputted from the CCD camera 4 with a wide shooting area and a low resolution, the CCD camera 5 with a narrow shooting area and a high resolution, and several kinds of sensors (for example, temperature sensors).

The emotion production processing 202 is adapted to produce emotions of the pet robot 1 based on the detection result of the environment detection processing 201, using formulas for calculating parameters expressing emotions. The emotion of the pet robot 1 (condition of the electronic equipment) includes, for example, "anger," "sadness," "pleasure," "fear, " "surprise," "dislike," etc, and the kind of emotion the robot has at present is expressed by the magnitude of the parameters corresponding to the respective emotions.

The movement determination processing 203 is adapted to determine a movement referring to parameters expressing emotions calculated in the emotion production processing 202.

The movement of the pet robot 1 includes, for example, "bite," "bark," "run," "cry," "sleep," etc, and these movements are specified by the lower and upper limits of the respective parameters representing the movements. For example, the movement of "bite" is determined when a parameter representing "anger" has a value of 90-100 and a parameter representing "sadness" a value of 0-20.

The control signal production processing 204 is adapted to produce a control signal through which a movement determined in the movement determination processing 203 is performed and to output the produced control signal to a motor 7 or the like for driving member components corresponding to hands, legs, a body and a head, that is, for example, to rotate a given motor 7.

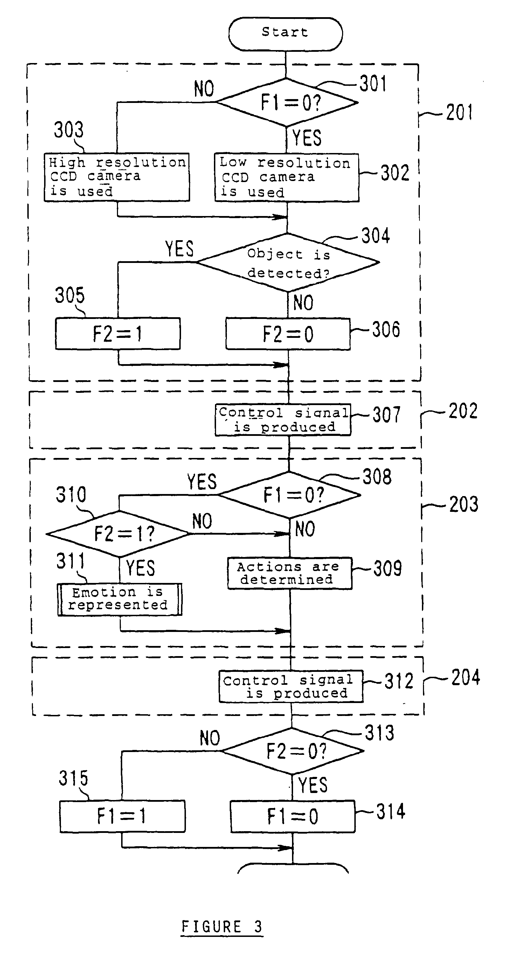

Contents of the pet robot control program is specifically a flowchart showing a general procedure of the processing. As shown in Fig. 3, Steps 301-306 correspond to the environment detection processing 201. First, at Step 301, it is determined whether or not a camera selection flag F1 has been set to a reset state of "0", that is, a condition under which the image information of a CCD camera 4 with a wide shooting area and a low resolution is used; if the flag F1 is in a reset state, the procedure proceeds to Step 302, where the CCD camera 4 with a wide shooting area and a low resolution is used; and if the flag is not in a reset state, the procedure proceeds to Step 303, where the image information of the CCD camera 5 with a narrow shooting area and a high resolution is used.

At Step 302, image information is acquired using the CCD camera 4 with a wide shooting area and a low resolution, and the procedure proceeds to Step 304 after searching of a given object based on the acquired image information.

On the other hand, at Step 303, image information is acquired using the CCD camera 5 with a narrow shooting area and a high resolution, and the procedure proceeds to Step 304 after searching of a given object based on the acquired image information.

At Step 304, it is determined whether or not a given object is detected at Step 302 or Step 303; if the given object is detected, the procedure proceeds to Step 305, where an object detection flag F2 is set to "1;" and if the given object is not determined, the procedure proceeds to Step 306, where the object detection flag F2 is reset to "0," and then to Step 307.

Step 307 corresponds to the emotion production processing 202. At Step 307, an emotion of the pet robot 1 is produced, based on the detection result of Step 302 or Step 303, and the procedure proceeds to Step 308.

Steps 308-311 correspond to the movement determination processing 203. First, at Step 308, it is determined whether or not the camera selection flag F1 is "0," that is, the image information acquired using the CCD camera 4 with a wide shooting area and a low resolution is used. If the determination of Step 308 is "NO," the procedure proceeds to Step 309.

If the determination of Step 308 is "YES," the procedure proceeds to Step 310, where it is determined whether or not the object detection flag F2 is "1," that is, an object is determined by the CCD camera 4 with a wide shooting area and a low resolution. If the determination of Step 310 is "NO," the procedure proceeds to Step 9, where actions are determined, based on the emotion produced at Step 307, and thereafter to Step 312.

On the other hand, if the determination of Step 310 is "YES," the procedure proceeds to Step 311, where a subroutine is executed for representing the emotion of the pet robot 1 produced at Step 307, and thereafter to Step 312.

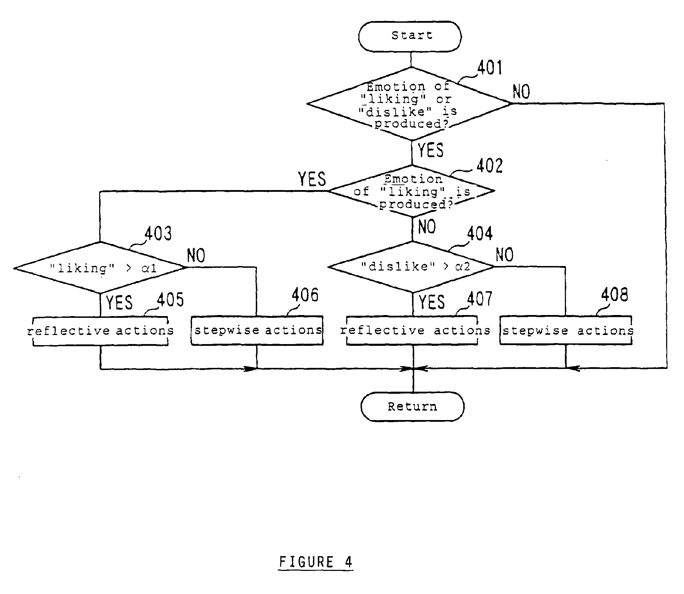

The subroutine for determining actions representing an emotion, as shown in Fig. 4 by a flowchart, is adapted to determine first at Step 401 whether or not an emotion of "liking" or "dislike" is produced.

If the determination of Step 401 is "NO," the emotion representation processing is completed directly and the procedure returns to the main program. If the determination of Step 401 is "YES," the procedure proceeds to Step 402, where it is determined whether or not the emotion of "liking" is produced; if the determination is "YES," the procedure proceeds to Step 403; and if the determination is "NO," the procedure proceeds to Step 404.

At Step 403, it is determined whether or not the magnitude of a parameter representing the emotion of "liking" is larger than a given threshold α1; if it is larger than the given threshold α1, the procedure proceeds to Step 405, where it is determined that reflective actions representing the emotion of "liking" are performed; if it is no larger than the given threshold α1, the procedure proceeds to Step 406, where it is determined that stepwise actions representing the emotion of "liking" are performed, and then returns to the main program.

At Step 404, it is determined whether or not the magnitude of a parameter representing the emotion of "dislike" is larger than a given threshold α2; if it is larger than the given threshold α2, the procedure proceeds to Step 407, where it is determined that reflective actions representing the emotion of "dislike" are performed; if it is no larger than the given threshold α2, the procedure proceeds to Step 408, where it is determined that stepwise actions representing the emotion of "dislike" are performed, and then returns to the main program.

Step 312 corresponds to the control signal production processing 204. At Step 312, a control signal for a determined movement is produced, based on the detection result of Step 302 or Step 303, to be sent to a motor 7, and then the procedure proceeds to Step 313.

Steps 313-315 are processing for updating the camera selection flag F1. At Step 313, it is determined whether or not the object detection flag F2 is in a reset state, that is, a condition under which a given object has been detected; if the determination is "YES," the camera selection flag F1 is reset to "0" so that image information of the CCD camera 4 with a wide shooting area and a low resolution is used at the time of execution of the next program; and if the determination is "NO," the camera selection flag F2 is set to "1" so that the CCD camera 5 with a narrow shooting area and a high resolution is used at the time of execution of the next program.

Now, the movement of this embodiment will be described in detail with reference to specific situations.

First, if a user of the pet robot 1 has just started the pet robot control program, the camera selection flag F1 is in a reset state of "0," therefore the procedure proceeds to Step 302, where a given object is searched using image information acquired by the CCD camera 4 with a wide shooting area and a low resolution.

Thus, if the given detection object has not been detected, rough detection of the surroundings is performed using means capable of searching a wide area at a time, thereby providing a quick wide area researching.

If the object has been detected in this case, the determination of Step 304 is "YES," and thus, the object detection flag F2 is "1." Thereafter, if the determination of "YES" at Step 308 is followed by the determination "YES" at Step 310, a subroutine is executed at Step 311 for determining actions representing an emotion.

Here, assuming that the object detected by the pet robot 1 is a sphere 10 and the pet robot 1 likes the sphere 10, the determination of both Step 401 and Step 402 is "YES," and the procedure proceeds to Step 403. If the parameter expressing an emotion of "liking" is no larger than a given threshold α1, the determination of Step 403 is "NO," and the procedure proceeds to Step 406, where it is determined that stepwise actions are taken for representing the emotion of "liking."

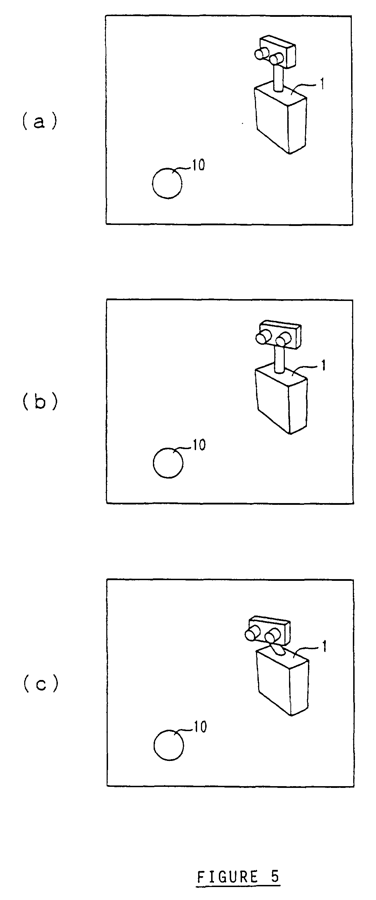

The pet robot 1 first, as shown in Fig. 5(a), drives the motor 7 connected to the CCD cameras 4, 5, to capture the sphere 10 at the center of its visual field; then, as shown in Fig. 5(b), also drives the motor 7 connected to the joint in the base of the face, to direct its face toward the sphere 10 being captured at the center of its visual field; and further, as shown in Fig. 5(c), also drives the motor 7 connected to the joints on both upper and lower sides of the neck, to push the face forward with the sphere 10 being captured at the center of its visual field. That is, actions of pushing the face forward correspond to actions representing the emotion of "liking."

On the other hand, if the parameter expressing an emotion of "liking" is larger than the given threshold α1, the determination of Step 403 is "YES," and the procedure proceeds to Step 405, where it is determined that reflective actions are taken for representing the emotion of "liking." The pet robot 1 is adapted to perform the foregoing stepwise actions of Step 403 at a time.

Alternatively, assuming that the object detected by the pet robot 1 is a cube 11 and the pet robot 1 dislikes the cube 11, the determination of Step 401 is "YES" and that of Step 402 is "NO," and the procedure proceeds to Step 404.

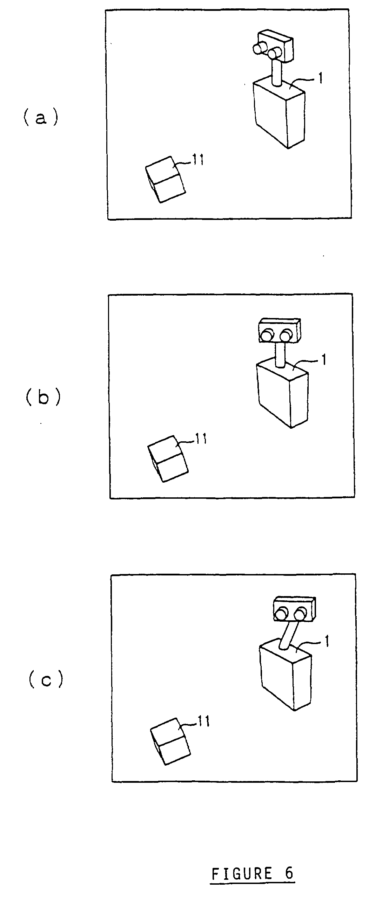

Here, if the parameter expressing an emotion of "dislike" is no larger than a given threshold α1, the determination of Step 404 is "NO," and the procedure proceeds to Step 408, where it is determined that stepwise actions are taken for representing the emotion of "dislike." The pet robot 1 first, as shown in Fig. 6(a), drives the motor 7 connected to the COD cameras 4, 5, to eliminate the cube 11 from the center of its visual field; then, as shown in Fig. 6(b), also drives the motor 7 connected to the joint in the base of the face, to turn the face away from the cube 11; and further, as shown in Fig. 6(c), also drives the motor 7 connected to the joints on both upper and lower sides of the neck, to turn the face backward with respect to the cube 11. That is, actions of turning the face backward correspond to actions representing the emotion of "dislike."

On the other hand, if the parameter expressing an emotion of "dislike" is larger than the given threshold α1, the determination of Step 404 is "YES," and the procedure proceeds to Step 407, where it is determined that reflective actions are performed for representing the emotion of "dislike." The pet robot 1 is adapted to perform the foregoing stepwise actions of Step 408 at a time.

Thus, actions representing an emotion by the move of given parts such as eyes and a neck of the pet robot 1 are performed prior to actions based on the emotion, so that a user is able to understand the emotion of the pet robot 1 by intuition and to thereby predict the subsequent movement naturally and effectively, providing a user feeling that the movement of the pet robot 1 is reasonable.

At Step 312, a control signal for the actions determined at Step 309 or Step 311 is produced, based on the detection result of Step 302, and sent to motors 7 disposed several sections of the pet robot 1, so that actions representing an emotion of the pet robot 1 are actually performed.

Since an given object has been detected, the determination of Step 313 is "NO," the procedure proceeds to Step 315, where the camera selection flag Fl is set to "1," and the main program is completed.

Alternatively, assuming that after a given control period ΔT, the pet robot control program is restarted while the pet robot is performing reflective or stepwise actions, since the camera selection flag F1 was set to "1" at the time of the previous execution of the program, the determination of Step 301 is "NO," the procedure proceeds to Step 303, where an object is detected, based on the image information acquired by the COD camera 5 with a narrow shooting area and a high resolution, and also since the determination of Step 308 is "NO," actions are determined, based on the foregoing emotion produced at Step 309.

Thus, when something like the given detection object has been detected, actions representing an emotion are performed, as well as a specific detection of the surroundings, using environment detection means capable of detecting specific information, providing main actions based on the specific detection result.

In this embodiment, the COD cameras 4, 5 and the environment detection processing 201 correspond to environment detection means, the emotion production processing 202 corresponds to emotion production means, and the movement determination processing 203 corresponds to movement detection means.

The foregoing embodiment has been exemplified by electronic equipment with an autonomous function, and it is not intended to limit the kinds of emotions to be represented, production method of emotions, and the like.

For example, although an example has been shown in which electronic equipment with an autonomous function is incorporated in a pet robot, this invention is not limited to a pet robot, but may be applied to electronic pet devices such as raising simulation game machines, and the like.

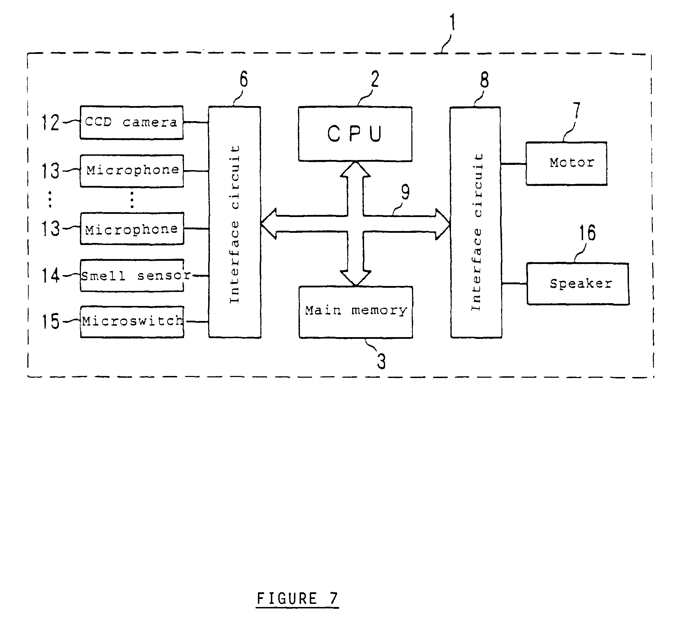

Also, in the foregoing embodiment, an example has been shown in which there are provided, as the environment detection means, a plurality of image shooting means with different shooting areas and resolutions, or CCD cameras 4, 5, and image recognition means for detecting a given object based on the image photographed by the CCD cameras 4, 5, or a CPU 2, and the CCD camera 4 with a wide shooting area and a low resolution is used when the given object is to be detected, while the CCD camera with a narrow shooting area and a high resolution is used when the given object has been detected. As shown in Fig. 7, however, there may be provided, as the environment detection means, a CCD camera 12 with a zoom function and image recognition means for detecting a given object based on the image photographed by the CCD camera 12, and the CCD camera 12 may be used on the zoom-out side when the given object is to be detected, while the CCD camera 12 may be used on the zoom-in side when the given object has been detected.

Further, there may be provided, as the environment detection means, a plurality of voice collection means, or a microphone 13; voice recognition means for detecting a given voice based on the voice collected by the microphone 13, or a CPU 2 or the like; sound source detection means for detecting a sound source based on the given voice detected by the voice recognition means, or a CPU 2 or the like; image shooting means, or a CCD camera 12; and image recognition means for detecting
a given object based on the image photographed by the CCD camera 12, or a CPU 2, and the CCD camera 12 may be directed toward the sound source detected by the sound source detection means. The microphone 13 is able to search a larger area than the CCD camera 12, so that the object can be detected effectively.

Furthermore, there may be provided, as the environment detection means, smell collection means, or a smell sensor 14; smell recognition means for detecting a given smell based on the smell collected by the smell sensor 14, or a CPU 2 or the like; smell source detection means for detecting the source of the given smell detected by the smell recognition means, or a CPU 2 or the like; image shooting means, or a COD camera 12; and image recognition means for detecting a given object based on the image photographed by the CCD camera 12, or a CPU 2 or the like, and the CCD camera 12 may be directed toward the source detected by the smell source detection means.

Moreover, there may be provided, as the environment detection means, tactile sensation detection means, or a microswitch 15; image shooting means, or a CCD camera 12; and image recognition means for detecting a given object based on the image photographed by the CCD camera 12, and the CCD camera 12 may be pointed in a direction detected by the microswitch 15.

On the other hand, when something like a given detection object has been detected through the foregoing wide area researching instead of using a plurality of environment detection means, the environment detection means may be pointed in a direction in which relatively clear information can be detected, for detailed detection of the surroundings. For example, there may be provided, as the environment detection means, voice collection means with a high directivity, or a microphone 13, and voice recognition means for detecting a given voice based on the voice collected by the microphone 13, and the microphone 13 may be pointed in a direction in which the voice of the given object can be detected relatively clearly.

Further, there may be provided, as the environment detection means, smell collection means, or a smell sensor 14, and smell recognition means for detecting a given smell based on the smell collected by the smell sensor 14, or CPU 2, and the smell sensor 14 may be pointed in a direction in which the given smell can be detected relatively clearly.

Furthermore, there may be provided, as the environment detection means, a plurality of voice collection means, or a microphone 13; voice recognition means for detecting a given voice based on the voice collected by the microphone 13, or a CPU 2 or the like; and sound source detection means for detecting a sound source based on the given voice detected by the voice recognition means, or a CPU 2 or the like, and the microphone 13 may be directed toward the sound source detected by the sound source detection means.

In the movement determination means described above, an example has been shown in which the parts of the pet robot 1 such as eyes, a face and a neck are moved by the motor 7 to represent the emotion, but other parts such as hands or legs may be moved by the motor 7, that is, an emotion of "liking" may be represented, for example, by raising both hands, or that of "dislike" may be represented by covering eyes with both hands.

In addition, the pet robot 1 may be provided with a speaker 16, and a voice representing an emotion may be emitted from the speaker in synchronization with the move of the parts such as eyes, a face and a neck. For example, when an emotion of "liking" is represented by the move of given parts, the "voice of pleasure" may be emitted from the speaker 15, or when the emotion of "dislike" is represented by the move of given parts, the "voice of surprise" may be emitted from the speaker 16, which allows the user to understand the emotion of the pet robot 1 more intuitively.

Further, parts used for actions representing the emotion of the pet robot 1 are different from parts used for main actions based on the emotion, the main actions may be performed while the actions representing the emotion are being performed. For example, while actions representing the emotion of "liking" are being performed by moving parts such as eyes, a face and a neck, main actions may be performed using parts such as hands and legs not in use for actions representing the emotion of "liking."

Although, in the foregoing embodiment, examples have been shown in which emotions of "liking" and "dislike" are represented, this invention is not intended to limit the emotion to be represented, but other emotions may be represented.

As described above, since in the electronic equipment with an autonomous function according to this embodiment, actions representing the emotion by the move of given parts of the electronic equipment are performed prior to main actions based on the emotion, it is possible for a user to understand the emotion of the electronic equipment with an autonomous function by intuition and to thereby predict the subsequent movement naturally and effectively, providing a user feeling that the movement of the electronic equipment with an autonomous function is reasonable.

The embodiment described above provides an electronic equipment with an autonomous function comprising environment detection means for detecting surroundings, emotion production means for producing an emotion based on the detected result by said environment detection means, and movement determination means for determining a movement based on the emotion produced by said emotion production means, wherein said movement determination means is adapted to determine said movement such that actions representing said emotion by the move of given parts of said electronic equipment are performed prior to main actions based on said emotion.

Therefore, since in the electronic equipment with autonomous function, actions representing said emotion by the move of given parts of said electronic equipment are performed prior to main actions based on said emotion, it is possible for a user to understand the emotion of the electronic equipment with an autonomous function by intuition and to thereby predict the subsequent movement naturally and effectively, providing a user feeling that the movement of the electronic equipment with an autonomous function is reasonable.

In this case, when a given detection object has not been detected, rough detection is preferably performed on the surroundings using environment detection means capable of searching a wide area at a time, and after something like the given detection object has been detected, actions representing an emotion based on the rough detection result of the surroundings are preferably performed, as well as a specific detection of the surroundings, using environment detection means capable of detecting specific information, thus providing main actions based on the specific detection result.

According to a preferred embodiment, it is provided, as the environment detection means, a plurality of image shooting means with different shooting areas and resolutions and image recognition means for detecting a given object based on the image photographed by the image shooting means, and when the given object is to be detected, an image shooting means with a wide shooting area and a low resolution may be employed, while when the given object has been detected, an image shooting means with a narrow shooting area and a high resolution may be employed.

According to a preferred embodiment, it is provided, as the environment detection means, image shooting means having zoom function and image recognition means for detecting a given object based on the image photographed by the image shooting means, and when the given object is to be detected, the image shooting means may be used on the zoom-out side, while when the given object has been detected, the image shooting means may be used on the zoom-in side.

According to a preferred embodiment, it is be provided, as the environment detection means, a plurality of voice collection means; voice recognition means for detecting a given voice based on the voice collected by the voice collection means; sound source detection means for detecting a sound source based on the given sound source detected by the voice recognition means; image shooting means; and image recognition means for detecting a given object based on the image photographed by the image shooting means, and the image shooting means may be directed toward the sound source detected by the sound source detection means. Since the voice collection means is able to search a wider area than the image shooting means, an object can be detected effectively.

According to a preferred embodiment, it is provided, as the environment detection means, smell collection means; smell recognition means for detecting a given smell based on the smell collected by the smell collection means; smell source detection means for detecting the given smell source detected by the smell recognition means; image shooting means; and image recognition means for detecting a given object based on the image photographed by the image shooting means, and the image shooting means may be directed toward the smell source detected by the smell source detection means.

According to a preferred embodiment, it is provided, as the environment detection means, tactile sensation detection means; image shooting means; and image recognition means for detecting a given object based on the image photographed by the image shooting means, and the image shooting means may be pointed in the direction detected by the tactile sensation detection means.

On the other hand, instead of using a plurality of environment detection means, the environment detection means may be pointed in a direction in which relatively clear information can be detected, for detailed detection of the surroundings, when something like the given detection object has been detected as a result of the wide area searching.

According to a preferred embodiment, it is provided, as the environment detection means, voice collection means with a high directivity and voice recognition means for detecting a given voice based on the voice collected by the voice collection means, and the voice collection means may be pointed in a direction in which the voice of the given object can be detected relatively clearly.

According to a preferred embodiment, it is provided, as the environment detection means, smell collection means and smell recognition means for detecting a given smell based on the smell collected by the smell collection means, and the smell recognition means may be pointed in a direction in which the given smell can be detected relatively clearly.

According to a preferred embodiment, it is provided, as the environment detection means, a plurality of voice collection means; voice recognition means for detecting a given voice based on the voice collected by the voice collection means; and sound source detection means for detecting sound source based on the given voice detected by the voice recognition means, and the voice collection means may be directed toward the sound source detected by the sound source detection means.

In addition, in the electronic equipment with an autonomous function said movement determination means is adapted to determine said movement such that when the level of said produced emotion exceeds a predetermined threshold, reflective actions are performed instead of actions representing said emotion.

Since a movement is determined such that when the level of an emotion exceeds a predetermined threshold, reflective actions are performed instead of actions representing the emotion, it is possible for a user to understand more intuitively the emotion of the electronic equipment with an autonomous function and to predict the subsequent movement, thereby providing a user feeling that the movement of the electronic equipment with an autonomous function is reasonable.

The embodiment described above teaches an electronic equipment with an autonomous function comprising environment detection means 4,5,12,13,14,15 for monitoring an environment of the electronic equipment 1, condition determining means for determining a condition of the electronic equipment 1 on the basis of information taken from the environment detection means 4,5,12,13,14,15, and an action control means for controlling a main action of the electronic equipment 1 and for controlling a condition action of the electronic equipment 1 on the basis of the condition produced by the condition production means. Said action control means is adapted to carry out the condition action prior to the main action.

Said condition determining means is provided for determining the condition as an emotion condition of a pet-robot, on the basis of information taken from the environment detection means 4,5,12,13,14,15.

The action control means of the embodiment is provided for determining a movement of given parts of said electronic equipment 1 as the condition action based on the condition determined by condition determining means. Said action control means is provided for determining a level of the condition and for controlling said condition action such that when the level of said condition exceeds a predetermined threshold, the condition action is performed as a reflective action, and when the level of said condition is below the predetermined threshold, the condition action is performed as a step-wise action.

The environment detection means 4,5,12,13,14,15 comprises sensing means for wide area monitoring of the environment of the electronic equipment 1 and/or sensing means for narrow area monitoring of the environment of the electronic equipment 1.

From the description of the above mentioned embodiment a method for controlling an electronic equipment with an autonomous function can be taken. Said method comprises the steps of: monitoring an environment of the electronic equipment 1, determining a condition of the electronic equipment 1 on the basis of information of the monitored environment, controlling a main action of the electronic equipment 1, and controlling a condition action of the electronic equipment 1 on the basis of said condition, wherein said condition action is carried out prior to the main action.

Said method for controlling an electronic equipment with an autonomous function further comprises determining the condition as an emotion condition of the electronic equipment (1) on the basis of information of the monitored environment.

Said method for controlling an electronic equipment with an autonomous function further comprises determining a movement of given parts of said electronic equipment 1 as the condition action based on the condition. Said method further comprises determining a level of the condition and controlling said condition action such that when the level of said condition exceeds a predetermined threshold. The condition action is performed as a reflective action, and when the level of said condition is below the predetermined threshold, the condition action is performed as a step-wise action.

Said method for controlling an electronic equipment with an autonomous function further comprises monitoring wide area of the environment of the electronic equipment 1 and/or monitoring narrow area of the environment of the electronic equipment 1 for determining the condition of the electronic equipment 1.

## Claims

1. Electronic equipment with an autonomous function comprising environment detection means (4,5,12,13,14,15) for monitoring an environment of the electronic equipment (1),
condition determining means for determining a condition of the electronic equipment (1) on the basis of information taken from the environment detection means (4,5,12,13,14,15),
an action control means for controlling a main action of the electronic equipment (1) and for controlling a condition action of the electronic equipment (1) on the basis of the condition produced by the condition production means, wherein said action control means is adapted to carry out the condition action prior to the main action.

2. Electronic equipment with an autonomous function according to claim 1, **characterized in that** said condition determining means is provided for determining the condition as an emotion condition of the electronic equipment (1), especially a pet-robot, on the basis of information taken from the environment detection means (4,5,12,13,14,15).

3. Electronic equipment with an autonomous function according to claim 1 or 2, **characterized in that** the action control means is provided for determining a movement of given parts of said electronic equipment (1) as the condition action based on the condition determined by condition determining means.

4. Electronic equipment with an autonomous function according to at least one of the claims 1 to 3, **characterized in that** said action control means is provided for determining a level of the condition and for controlling said condition action such that when the level of said condition exceeds a predetermined threshold, the condition action is performed as a reflective action, and when the level of said condition is below the predetermined threshold, the condition action is performed as a step-wise action.

5. Electronic equipment with an autonomous function according to at least one of the claims 1 to 4, **characterized in that** the environment detection means (4,5,12,13,14,15) comprises sensing means for wide area monitoring of the environment of the electronic equipment (1) and/or sensing means for narrow area monitoring of the environment of the electronic equipment (1).

6. Method for controlling an electronic equipment with an autonomous function comprising the steps of:
monitoring an environment of the electronic equipment (1), determining a condition of the electronic equipment (1) on the basis of information of the monitored environment,
controlling a main action of the electronic equipment (1),
controlling a condition action of the electronic equipment (1) on the basis of said condition, wherein said condition action is carried out prior to the main action.

7. Method for controlling an electronic equipment with an autonomous function according to claim 6, **characterized by** determining the condition as an emotion condition of the electronic equipment (1) on the basis of information of the monitored environment.

8. Method for controlling an electronic equipment with an autonomous function according to claim 6 or 7, **characterized by** determining a movement of given parts of said electronic equipment (1) as the condition action based on the condition.

9. Method for controlling an Electronic equipment with an autonomous function according to at least one of the claims 6 to 8, **characterized by** determining a level of the condition and controlling said condition action such that when the level of said condition exceeds a predetermined threshold, the condition action is performed as a reflective action, and when the level of said condition is below the predetermined threshold, the condition action is performed as a step-wise action.

10. Method for controlling an electronic equipment with an autonomous function according to at least one of the claims 6 to 9, **characterized by** monitoring wide area of the environment of the electronic equipment (1) and/or monitoring narrow area of the environment of the electronic equipment (1) for determining the condition of the electronic equipment (1)
